# EUROPÄISCHE PATENTSCHRIFT

(11) **EP 2 845 697 B1**
(45) Veröffentlichungstag und Bekanntmachung des Hinweises auf die Patenterteilung: **08.09.2021**
(21) Anmeldenummer: 14002390.4
(22) Anmeldetag: 11.07.2014
(51) Int. Cl.: B25J 9/16

(54) **Verfahren zum Überwachen einer nutzlastführenden Roboteranordnung**
Method for monitoring a robot assembly that conveys a payload
Procédé de surveillance d'un système de robot guidant une charge utile

(30) Priorität: 26.07.2013 DE 102013012446
(43) Veröffentlichungstag der Anmeldung: 11.03.2015
(73) Patentinhaber: KUKA Deutschland GmbH, 86165 Augsburg (DE)
(72) Erfinder: Geiler, Torsten, 86179 Augsburg (DE); Steigenberger, Florian, 86368 Gersthofen (DE); Roland, Frank, 86157 Augsburg (DE); Bonin, Uwe, 86316 Friedberg (DE); Rudolf, Richard, 86161 Augsburg (DE)
(74) Vertreter: Schlotter, Alexander Carolus Paul

(56) Entgegenhaltungen:
- EP-A2- 2 087 967
- DE-T1- 19 581 677
- US-A1- 2007 276 538
- US-A1- 2013 178 980
- None

## Beschreibung

Die vorliegende Erfindung betrifft ein Verfahren und ein Überwachungsmittel zum Überwachen einer nutzlastführenden Roboteranordnung, eine Roboteranordnung mit einem solchen Überwachungsmittel sowie ein Computerprogrammprodukt zur Durchführung eines solchen Verfahrens.

Zur Erhöhung der Produktivität können Roboter unterschiedliche Nutzlasten führen: beispielsweise kann ein Roboter abwechselnd unterschiedliche Werkzeuge führen und hierzu jeweils ein nicht mehr benötigtes Werkzeug ablegen und ein neues aufnehmen, d.h. Werkzeuge wechseln.

Dabei soll das jeweils geführte Werkzeug bekannt sein, insbesondere, um dessen Konturen bei einer Kollisionsüberwachung zu berücksichtigen. Nach betriebsinterner Praxis werden hierzu bisher spezielle Werkzeugsensoren eingesetzt, durch die das jeweils vom Roboter geführte Werkzeug sicher identifizierbar ist. Nachteilig muss dabei jedes Werkzeug wenigstens einen eigenen Sensor aufweisen.

Aus der EP 2 087 967 A2 ist eine Robotersicherheitsüberwachung bekannt, bei der bestimmt wird, ob die erste Werkzeugidentifikationsinformation, die von einer Robotersteuervorrichtung ausgegeben wird und ein vorhandenes Werkzeug anzeigt, und die zweite Werkzeugidentifikationsinformation zum Erfassen und Identifizieren eines an dem Roboter angebrachten Werkzeugs ungleich zueinander sind oder nicht, wobei die Positionskoordinaten des gelernten Referenzpunkts in einem tatsächlichen Raum des Roboters, die zu dem Zeitpunkt auftreten, zu dem die Ungleichheit zwischen ihnen zum ersten Mal erfasst wird, als Referenzkoordinaten festgelegt werden und ein Bereich, der die Referenzkoordinaten enthält, als vorbestimmter Bereich festgelegt wird, wobei ein Not-Aus-Signal ausgegeben wird, um den Roboter in einen sicheren Zustand zu bringen, wenn die Positionskoordinaten des gelernten Referenzpunkts außerhalb des vorbestimmten Bereichs während eines Zeitraums existieren, während dem festgestellt wird, dass die vorstehenden zwei Informationen ungleich sind.

Aufgabe der vorliegenden Erfindung ist es, den Betrieb einer Roboteranordnung zu verbessern.

Diese Aufgabe wird durch ein Verfahren mit den Merkmalen des Anspruchs 1 gelöst. Ansprüche 9 bis 11 stellen ein Überwachungsmittel bzw. Computerprogrammprodukt zur Durchführung eines erfindungsgemäßen Verfahrens bzw. eine entsprechende Roboteranordnung unter Schutz. Die Unteransprüche betreffen vorteilhafte Weiterbildungen.

Nach einem Aspekt der vorliegenden Erfindung wird eine robotergeführte Nutzlastanordnung auf Basis einer aktuellen Position einer Roboteranordnung relativ zu einer vorgegebenen Wechselposition dieser Roboteranordnung identifiziert.

Dem liegt die Idee zugrunde, dass Roboter für einen Nutzlastwechsel eine bestimmte Wechselposition anfahren müssen. Entsprechend kann davon ausgegangen werden, dass nach dem Anfahren der jeweiligen Wechselposition die dieser zugeordnete Nutzlast von der Roboteranordnung aufgenommen worden ist und nun von ihr geführt wird. Entsprechend kann auf Basis der aktuellen Position der Roboteranordnung relativ zu einer vorgegebenen Wechselposition die neue Nutzlast identifiziert werden. Auf diese Weise kann in einer Ausführung vorteilhaft die Anzahl von Werkzeugsensoren reduziert werden, in einer Weiterbildung können diese gänzlich entfallen. Alternativ kann je höchstens ein, insbesondere nicht sicherer, Nutzlastsensor pro Nutzlast vorgesehen sein, der in Kombination mit einer Nutzlastidentifikation auf Basis einer Wechselposition gleichwohl eine sichere Nutzlastidentifikation ermöglicht. Hierdurch kann jeweils insbesondere der Aufwand und/oder eine Ausfallwahrscheinlichkeit einer auf einer identifizierten Nutzlast basierenden Überwachung reduziert werden.

Eine Nutzlast kann, wie einleitend erläutert, insbesondere ein Werkzeug sein. Zusätzlich oder alternativ kann eine Nutzlast auch ein Werkstück bzw. Bauteil sein. Werkzeuge und -stücke werden zur kompakteren Darstellung daher zusammenfassend als Nutzlast bezeichnet.

Die Roboteranordnung weist in einer Ausführung wenigstens einen, insbesondere genau einen einzigen, oder mehrere Roboter, insbesondere Industrieroboter, auf. Wenigstens ein, vorzugsweise alle Roboter der Roboteranordnung sind in einer Ausführung zum abwechselnden Führen verschiedener Werkzeuge und/oder Werkstücke eingerichtet, insbesondere können ein oder mehrere Roboter jeweils eine Nutzlastanbindung, beispielsweise einen Werkzeuggreifer bzw. eine Werkzeugkupplung, aufweisen.

In einer Ausführung weist die Roboteranordnung eine, insbesondere stationäre, Aufnahme zum Aufnehmen bzw. Aufbewahren bzw. Ablegen verschiedener Werkzeuge und/oder Werkstücke in unterschiedlichen Nutzlastaufbewahrungspositionen auf, insbesondere einen Werkzeugwechselbahnhof.

Eine Position im Sinne der vorliegenden Erfindung kann insbesondere eine Pose eines oder mehrerer Roboter der Roboteranordnung umfassen, insbesondere sein. In einer Ausführung kann eine Position einen oder mehrere, insbesondere alle, Gelenkkoordinaten eines oder mehrerer Roboter der Roboteranordnung aufweisen. Zusätzlich oder alternativ kann eine Position im Sinne der vorliegenden Erfindung in einer Ausführung eine ein-, zwei- oder dreidimensionale Lage, beschrieben beispielsweise durch kartesische, Zylinder- oder Polarkoordinaten, und/oder eine ein-, zwei- oder dreidimensionale Orientierung, beschrieben beispielsweise durch Euler- oder Kardan-Winkel, einer roboterfesten Referenz eines oder mehrerer Roboter der Roboteranordnung umfassen, insbesondere sein. In einer Ausführung umfasst, insbesondere ist, die Position die Lage und/oder Orientierung des Werkzeugreferenzpunktes ("Tool Center Point", TCP) eines oder mehrerer Roboter der Roboteranordnung.

In einer Ausführung werden eine oder verschiedene Nutzlasten, die in unterschiedlichen Nutzlastaufbewahrungspositionen aufbewahrt bzw. abgelegt sind, mit der Roboteranordnung angefahren, beispielsweise manuell beim Einrichten der Roboteranordnung oder virtuell in einer Simulation. Gleichermaßen können auch leere Nutzlastaufbewahrungspositionen mit der nutzlastführenden Roboteranordnung angefahren, d.h. eine robotergeführte Nutzlast in ihre Nutzlastaufbewahrungsposition positioniert werden. Gleichermaßen ist es auch möglich, eine Nutzlastaufbewahrungsposition mit nutzlastfreier Roboteranordnung bzw. ohne robotergeführte Nutzlast anzufahren, d.h. eine Nutzlast nur virtuell in ihre Nutzlastaufbewahrungsposition zu positionieren.

Auf Basis einer Position der Roboteranordnung, in der die Roboteranordnung eine Nutzlastaufbewahrungsposition, insbesondere ohne Nutzlast eine in einer Nutzlastaufbewahrungsposition aufbewahrte Nutzlast oder mit einer Nutzlast eine freie Nutzlastaufbewahrungsposition, angefahren hat, wird in einer Ausführung dieser Nutzlast bzw. Nutzlastaufbewahrungsposition jeweils eine Wechselposition zugeordnet bzw. eine Wechselposition, die der Nutzlast zugeordnet ist, welche dieser Nutzlastaufbewahrungsposition zugeordnet ist, auf Basis der Position der Roboteranordnung vorgegeben, insbesondere abgespeichert, wobei vorzugsweise verschiedenen Nutzlasten unterschiedliche Wechselpositionen zugeordnet werden bzw. sind. Es kann also insbesondere mit einer robotergeführten Nutzlast eine Nutzlastaufbewahrungsposition angefahren und/oder mit der nutzlastfreien Roboteranordnung eine Nutzlast in einer Nutzlastaufbewahrungsposition angefahren werden. Eine dieser Nutzlast zugeordnete Wechselposition kann auf Basis der dabei eingenommenen Position der Roboteranordnung vorgegeben, insbesondere abgespeichert werden.

Insbesondere kann als Wechselposition, wenigstens im Wesentlichen, die Position selber vorgegeben werden, in der die Roboteranordnung die Nutzlast angefahren hat, beispielsweise die Lage und/oder Orientierung des TCPs eines Roboters, wenn er ein aufzunehmendes Werkzeug angefahren oder mit einem Werkzeug eine Nutzlastaufnahme zum Ablegen dieses Werkzeugs angefahren hat. Gleichermaßen kann die Wechselposition gegenüber dieser Position, in der die Roboteranordnung die Nutzlast angefahren hat, auch versetzt vorgegeben werden, insbesondere auf Basis einer maximalen Nutzlastkontur: wenn, wie nachfolgend erläutert, beim Anfahren einer aufzunehmenden neuen Nutzlast mit nutzlastfreiem Roboter zunächst weiterhin eine zuvor geführte und mittlerweile abgelegte Nutzlast identifiziert bleibt, kann dies eine Kollisionsüberwachung der weiterhin identifizierten Nutzlast mit der angefahrenen Nutzlastaufnahme auslösen. Insbesondere, um dies zu vermeiden, kann in einer Ausführung die Wechselposition entsprechend versetzt werden.

In einer Ausführung wird eine Nutzlast als robotergeführte Nutzlastanordnung identifiziert, wenn eine Abweichung zwischen der aktuellen Position der Roboteranordnung und einer dieser Nutzlast zugeordneten Wechselposition einen vorgegebenen Grenzwert unterschreitet. Dieser Grenzwert kann fest oder variabel sein, er kann in einer Ausführung für alle Nutzlasten bzw. Wechselpositionen gleich oder auch individuell bzw. wechselpositionsspezifisch vorgegeben werden bzw. sein.

Abweichung und/oder Grenzwert können ein- oder mehrdimensional sein. Ist eine Position r beispielsweise sechsdimensional durch eine dreidimensionale Lage x, y, z und eine dreidimensionale Orientierung α, β, γ des TCPs definiert (*r* = (x, y, z, α, β, γ)), kann die Abweichung Δ zwischen aktueller Position r und Wechselposition *r*_{w} beispielsweise durch eine Norm, etwa eine eindimensionale Betrags- oder Maximalnorm Δ = |*r* - *r*_{w}| bzw. Δ = MAX{x-x_{w}, y-y_{w}, z-z_{w}, α-α_{w}, β-β_{w}, γ-γ_{w}} oder auch mehrdimensional komponentenweise Δ = (x-x_{w}, y-y_{w}, z-z_{w}, α-α_{w}, β-β_{w}, γ-γ_{w}) definiert sein.

Zusätzlich oder alternativ zu einer ausreichenden Annäherung an eine Wechselposition kann auch eine Aktuierung der Roboteranordnung berücksichtigt werden, insbesondere kann ein Nutzlastwechsel auf Basis einer Aktuierung der Roboteranordnung, insbesondere einer Kontaktkraft und/oder einem Betätigen, insbesondere einem Öffnen und/oder Schließen, einer Nutzlastanbindung, beispielsweise eines Werkzeuggreifers bzw. einer Werkzeugkupplung, ermittelt werden. In einer Ausführung muss zur Identifikation einer (neuen) Nutzlast eine Abweichung zwischen der aktuellen Position der Roboteranordnung und einer dieser Nutzlast zugeordneten Wechselposition bei einer Aktuierung, insbesondere bei einem Öffnen und/oder Schließen einer Nutzlastanbindung der Roboteranordnung und/oder zu einem Zeitpunkt zwischen Öffnen und Schließen den vorgegebenen Grenzwert unterschreiten. Fährt beispielsweise ein Roboter eine Wechselposition an, ohne abschließend einen Werkzeuggreifer zu schließen, wird dann kein neues Werkzeug identifiziert.

In einer Ausführung wird eine robotergeführte Nutzlastanordnung auf Basis einer aktuellen Position der Roboteranordnung relativ zu einer vorgegebenen Wechselposition der Roboteranordnung bei einem Nutzlastwechsel identifiziert, insbesondere eine Nutzlast als robotergeführte Nutzlastanordnung identifiziert, wenn bei einem Nutzlastwechsel eine Abweichung zwischen der aktuellen Position der Roboteranordnung und einer dieser Nutzlast zugeordneten Wechselposition einen vorgegebenen Grenzwert unterschreitet, wobei ein Nutzlastwechsel insbesondere auf Basis einer Aktuierung der Roboteranordnung ermittelt werden kann, beispielsweise wie vorstehend erläutert einem Betätigen einer Nutzlastanbindung der Roboteranordnung, zum Beispiel einer Werkzeugkupplung. Gleichermaßen kann eine aktuelle Position der Roboteranordnung auch kontinuierlich, insbesondere periodisch bzw. in vorgegebenen Zeitabständen, ermittelt und mit einer oder mehreren vorgegebenen Wechselpositionen verglichen werden, wobei eine Nutzlast jeweils als (neue) robotergeführte Nutzlastanordnung identifiziert wird, sobald eine Abweichung zwischen der aktuellen Position der Roboteranordnung und einer dieser Nutzlast zugeordneten Wechselposition einen vorgegebenen Grenzwert unterschreitet.

In einer Ausführung wird bzw. ist wenigstens während einer Bewegung der Roboteranordnung, vorzugsweise während des kompletten Betriebs, stets eine Nutzlastanordnung mit wenigstens einer Nutzlast als robotergeführte Nutzlastanordnung identifiziert. Auf diese Weise kann in einer Ausführung insbesondere die Zuverlässigkeit einer Kollisionsüberwachung verbessert werden. Insbesondere hierzu kann in einer Ausführung eine identifizierte robotergeführte Nutzlastanordnung, insbesondere nur bzw. ausschließlich, durch eine neue identifizierte Nutzlastanordnung ersetzt werden. Wird ungewollt eine Nutzlast nicht abgekoppelt, soll diese weiterhin als robotergeführt identifiziert bleiben, insbesondere, um eine korrekte Kollisionsüberwachung zu gewährleisten. Dies kann insbesondere dadurch erreicht werden, dass die identifizierte Nutzlast nur durch eine neue identifizierte Nutzlastanordnung ersetzt werden kann.

In einer Ausführung ist hierbei vorgesehen, dass jede identifizierbare Nutzlastanordnung wenigstens eine Nutzlast aufweist. Gleichermaßen kann eine identifizierbare Nutzlastanordnung vorgesehen sein, die keine Nutzlast aufweist, um auch eine leere bzw. nutzlastfreie Roboteranordnung überwachen zu können: fährt die Roboteranordnung nach Ablegen einer Nutzlast beispielsweise eine vorgegebene Leer-Wechselposition an, gegebenenfalls unter Aktuierung ihrer Nutzlastanbindung, kann diese leere Nutzlastanordnung ohne Nutzlast als neue robotergeführte Nutzlastanordnung identifiziert werden, d.h. die leere Roboteranordnung korrekt überwacht werden.

Zusätzlich oder alternativ ist bzw. wird in einer Ausführung in einem vorgegebenen Zustand der Roboteranordnung eine Nutzlastanordnung mit zwei oder mehr Nutzlasten als robotergeführte Nutzlastanordnung identifiziert.

Der vorgegebene Zustand der Roboteranordnung kann insbesondere ein Betriebs- oder Bewegungsbeginn sein. Indem zunächst, auch bei nutzlastfreier Roboteranordnung, fiktiv eine Nutzlastanordnung mit zwei oder mehr Nutzlasten, insbesondere allen Nutzlasten der Nutzlastaufnahme, beispielsweise des Werkzeugwechselbahnhofs, identifiziert und in einer Kollisionsüberwachung berücksichtigt wird, kann auch bei versehentlich anfänglich angekoppelter Nutzlast, insbesondere beim Anfahren eines ersten Werkzeugwechsels, eine zuverlässige Kollisionsüberwachung durchgeführt werden. Wird ein (erster) Nutzlastwechsel korrekt durchgeführt, wird die dabei aufgenommene Nutzlast identifiziert und ersetzt diese fiktive Nutzlastanordnung.

Zusätzlich oder alternativ kann der vorgegebene Zustand der Roboteranordnung insbesondere ein Fehlerzustand sein, beispielsweise nach einem Nutzlastverlust, einem nicht erfolgten Abkoppeln einer Nutzlast, einer Kollision oder dergleichen. Indem (wieder) fiktiv eine Nutzlastanordnung mit zwei oder mehr Nutzlasten, insbesondere allen Nutzlasten der Nutzlastaufnahme, beispielsweise des Werkzeugwechselbahnhofs, identifiziert und in einer Kollisionsüberwachung berücksichtigt wird, kann auch in einem solchen Fehlerfall eine zuverlässige Kollisionsüberwachung durchgeführt werden. Wird (anschließend) ein Nutzlastwechsel korrekt durchgeführt, wird die dabei aufgenommene Nutzlast identifiziert und ersetzt diese fiktive Nutzlastanordnung.

Ein Überwachen einer nutzlastführenden Roboteranordnung mit Identifikation einer robotergeführten Nutzlastanordnung kann insbesondere auf Kollision erfolgen. Entsprechend wird in einer Ausführung der vorliegenden Erfindung die Roboteranordnung auf Basis der jeweils identifizierten robotergeführten Nutzlastanordnung auf Kollision überwacht, insbesondere, indem eine Kontur, die für die jeweils identifizierte Nutzlastanordnung abgespeichert ist, bei der Kollisionsüberwachung berücksichtigt wird. Gleichermaßen kann ein Überwachen einer nutzlastführenden Roboteranordnung mit Identifikation einer robotergeführten Nutzlastanordnung beispielsweise sicherstellen, dass eine zulässige Traglast und/oder eine vorgegebene Werkzeug- oder -stückzeit nicht überschritten wird oder dergleichen.

Ein Überwachungsmittel nach einem Aspekt der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere die Roboteranordnung überwachen kann. Ein Überwachungsmittel kann insbesondere in einer bzw. durch eine Steuerung der Roboteranordnung implementiert sein.

In einer Ausführung ist das Überwachungsmittel zum Ermitteln einer aktuellen Position der Roboteranordnung, insbesondere bei einem Nutzlastwechsel, eingerichtet. Hierzu kann es insbesondere einen oder mehrere Sensoren zum Erfassen von Gelenkkoordinaten der Roboteranordnung aufweisen. In einer Ausführung wird die aktuelle Position der Roboteranordnung bei einem Nutzlastwechsel durch das Überwachungsmittel sicher bzw. in sicherer Technik ermittelt, insbesondere redundant, vorzugsweise diversitär, beispielsweise durch je zwei Sensoren zum Erfassen derselben Gelenkkoordinaten oder dergleichen.

Ein Computerprogrammprodukt nach einem Aspekt der vorliegenden Erfindung kann insbesondere ein computerlesbares Speichermedium, beispielsweise ein Datenträger, mit einem Programmcode sein, durch den ein hier beschriebenes Verfahrens durchgeführt wird, wenn das Programm in einem Überwachungsmittel, insbesondere einer Steuerung, einer Roboteranordnung, abläuft.

Weitere Vorteile und Merkmale ergeben sich aus den Unteransprüchen und den Ausführungsbeispielen. Hierzu zeigt, teilweise schematisiert:
- Fig. 1:: einen Teil einer Roboteranordnung nach einer Ausführung der vorliegenden Erfindung; und
- Fig. 2:: ein Verfahren zum Überwachen der Roboteranordnung der Fig. 1 nach einer Ausführung der vorliegenden Erfindung.

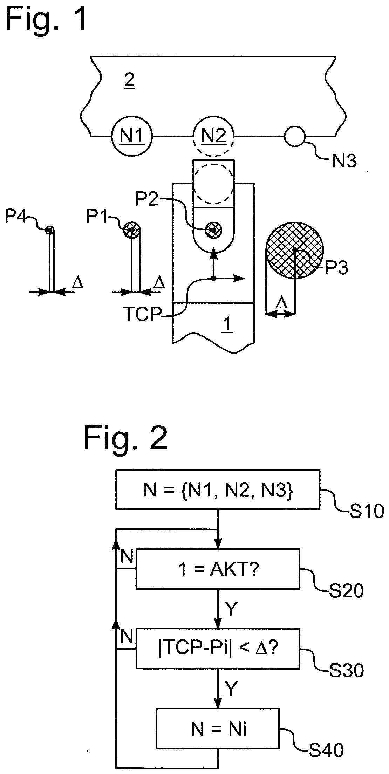

Fig. 1 zeigt einen Teil eines Roboters 1, der gerade kein Werkzeug führt, beim Verlassen oder Anfahren eines Werkzeugwechselbahnhofs 2, der zur Aufnahme unterschiedlicher Werkzeuge N1 bis N3 eingerichtet ist. Derzeit nicht vom Roboter geführte Werkzeuge N1, N2, N3 sind in dem Werkzeugwechselbahnhof abgelegt. Eine aktuelle Lage und Orientierung des TCPs des Roboters wird auf Basis einer durch Gelenksensoren (nicht dargestellt) erfassten Pose mittels Vorwärtskinematik ermittelt und ist in Fig. 1 durch ein Koordinatensystem angedeutet.

Fig. 2 zeigt ein Verfahren zum Überwachen der Roboteranordnung der Fig. 1 nach einer Ausführung der vorliegenden Erfindung, welches in einer Steuerung (nicht dargestellt) des Roboters 1 abläuft.

Zu Betriebsbeginn wird in einem Schritt S10 eine Nutzlastanordnung {N1, N2, N3} mit allen Nutzlasten des Werkzeugwechselbahnhofs 2 als robotergeführte Nutzlastanordnung N identifiziert und der Roboter 1 auf Basis dieser identifizierten robotergeführten Nutzlastanordnung N = {N1, N2, N3} auf Kollision überwacht.

Bei einem ersten Werkzeugwechsel öffnet der Roboter seinen Werkzeuggreifer, fährt das entsprechende Werkzeug, beispielsweise das Werkzeug N2, an, schließt seinen Werkzeuggreifer und verlässt den Werkzeugwechselbahnhof (vgl. Fig. 1).

Auf Basis dieses Öffnens und Schließens seines Werkzeuggreifers wird in einem Schritt S20 ein Werkzeugwechsel ermittelt, indem geprüft wird, ob der Werkzeuggreifer geöffnet und wieder geschlossen worden ist (S20: "Y") oder nicht (S20: "N").

Wenn ein Öffnen und Schließen des Werkzeuggreifers ermittelt wird, (S20: "Y"), wird eine Abweichung Δ zwischen der aktuellen Position des TCPs des Roboters 1 und einer vorgegebenen Wechselposition Pi (i = 1, 2, 3) ermittelt, im Beispiel der Wechselposition P2.

Unterschreitet diese Abweichung Δ einen vorgegebenen Grenzwert (S30: "Y"), wie in Fig. 1 kreuzschraffiert angedeutet, wird das dieser Wechselposition zugeordnete Werkzeug, im Beispiel das Werkzeug N2, als (neue) Nutzlastanordnung N identifiziert und der Roboter 1 auf Basis dieser identifizierten robotergeführten Nutzlastanordnung N = N2 auf Kollision überwacht. Andernfalls (S30: "N") verbleibt es bei der anfänglich identifizierten robotergeführten Nutzlastanordnung N = {N1, N2, N3}.

Bei einem weiteren Werkzeugwechsel legt der Roboter zunächst das bisher geführte Werkzeug ab, beispielsweise das Werkzeug N2. Dabei bleibt es zunächst bei der identifizierten robotergeführten Nutzlastanordnung N = N2.

Anschließend fährt er das neue Werkzeug, beispielsweise das Werkzeug N1, an, um dieses in gleicher Weise aufzunehmen wie vorstehend beschrieben: wenn ein Öffnen und Schließen des Werkzeuggreifers ermittelt wird (S20: "Y"), wird eine Abweichung Δ zwischen der Position des TCPs und der vorgegebenen Wechselposition P1 ermittelt.

Unterschreitet diese Abweichung Δ einen vorgegebenen Grenzwert (S30: "Y"), wird das dieser Wechselposition zugeordnete Werkzeug N1, als neue Nutzlastanordnung N identifiziert und der Roboter 1 auf Basis dieser identifizierten robotergeführten Nutzlastanordnung N = N1 auf Kollision überwacht. Andernfalls (S30: "N") verbleibt es weiterhin bei der identifizierten robotergeführten Nutzlastanordnung N = N2.

Auf diese Weise kann auch für den Fall, dass das Werkzeug N2 nicht erfolgreich abgekoppelt wurde, weiterhin eine zuverlässige Kollisionsüberwachung sichergestellt werden.

Um in konsistenter Weise auch einen werkzeugfreien Roboter identifzieren zu können, ist weiterhin eine freie bzw. leere Wechselposition P4 vorgesehen, der eine leere Nutzlastanordnung ohne Nutzlast zugeordnet ist (N = { }). Fährt der Roboter 1 nach Ablegen eines Werkzeugs N1, N2 oder N3 diese leere Wechselposition P4 an und öffnet und schließt dort seinen Werkzeuggreifer (S20: "Y", S30: "Y"), wird diese leere Nutzlastanordnung N = { } identifiziert, so dass ab jetzt der leere, werkzeugfreie Roboter korrekt auf Kollision überwacht wird, bis er wieder ein Werkzeug aufnimmt und dies in der vorstehend erläuterten Weise identifiziert wird.

Um die unterschiedlichen Wechselpositionen P1 bis P3 vorzugeben, wurden zunächst die verschiedenen Werkzeuge N1 bis N3 mit dem leeren Roboter 1 angefahren. Gleichermaßen können auch die Aufbewahrungspositionen im Werkzeugwechselbahnhof 2 jeweils mit den robotergeführten Werkzeugen N1, N2 bzw. N3 angefahren werden.

Die Positionen, in denen die Werkzeuge N1 und N2 bzw. deren Aufbewahrungspositionen angefahren sind, wurden direkt als Wechselpositionen abgespeichert.

Exemplarisch ist in Fig. 1 ein Werkzeug N3 mit kleinerer Außenkontur angedeutet. Würde die Position des TCPs des Roboters 1 bei angefahrenem Werkzeug N3 als Wechselposition vorgegeben und der Roboter beim Anfahren dieses Werkzeugs im Betrieb bis zum Erreichen dieser Wechselposition mit einem der anderen, größeren Werkzeuge N1, N2 als identifizierte robotergeführte Nutzlastanordnung N auf Kollision überwacht, würde diese Kollisionsüberwachung bereits vor Erreichen dieser Wechselposition ausgelöst. Daher wird im Ausführungsbeispiel die dem Werkzeug N3 zugeordnete Wechselposition P3 versetzt zu der Position vorgegeben, in der dieses Werkzeug N3 angefahren ist, und zwar auf Basis der maximalen Werkzeugkontur, im Beispiel der Kontur der Werkzeuge N1 und N2, zudem ist der vorgegebene Grenzwert Δ für diese Wechselposition entsprechend größer vorgegeben. Alternativ könnte beispielsweise auch die Kollisionsüberwachung im Bereich der Wechselpositionen bzw. des Werkzeugwechselbahnhofs deaktiviert werden.

In einer Abwandlung kann der Schritt S20 auch entfallen, so dass stets bei Anfahren einer der Wechselpositionen P1 bis P3 innerhalb des durch den Grenzwert Δ vorgegebenen Toleranzbereichs das zugeordnete Werkzeug N1, N2 bzw. N3 identifiziert wird, d.h. auch ohne Ermitteln eines Werkzeugwechsels.

Der Toleranzbereich Δ um die freie Wechselposition P4 ist kleiner vorgegeben, um für eine Identifikation eines werkzeugfreien Roboters eine höhere Sicherheit darzustellen.

### Bezugszeichenliste

- 1: Roboter
- 2: Werkzeugwechselbahnhof (Nutzlastaufnahme)
- N1,..., N3: Werkzeug (Nutzlast)
- P1,..., P4: Wechselposition
- TCP: aktuelle Position des Tool Center Points
- Δ: Abweichung

## Patentansprüche

1. Verfahren zum Überwachen einer nutzlastführenden Roboteranordnung mit wenigstens einem Roboter (1), **dadurch gekennzeichnet, dass** eine robotergeführte Nutzlastanordnung (N) auf Basis einer aktuellen Position (TCP) der Roboteranordnung relativ zu einer vorgegebenen Wechselposition (P1, P2, P3, P4) der Roboteranordnung identifiziert wird (S30, S40), wobei eine Nutzlast (N1, N2, N3, { }) als robotergeführte Nutzlastanordnung (N) identifiziert wird (S40), wenn eine Abweichung zwischen der aktuellen Position der Roboteranordnung und einer dieser Nutzlast zugeordneten Wechselposition einen vorgegebenen Grenzwert (Δ) unterschreitet (S30).

2. Verfahren nach dem vorhergehenden Anspruch, wobei ein Nutzlastwechsel auf Basis einer Aktuierung der Roboteranordnung ermittelt wird (S20).

3. Verfahren nach einem der vorhergehenden Ansprüche, wobei eine identifizierte robotergeführte Nutzlastanordnung durch eine neue identifizierte Nutzlastanordnung ersetzt wird (S40).

4. Verfahren nach einem der vorhergehenden Ansprüche, wobei wenigstens während einer Bewegung der Roboteranordnung stets eine Nutzlastanordnung mit wenigstens einer Nutzlast als robotergeführte Nutzlastanordnung identifiziert ist oder wobei eine Nutzlastanordnung (N = { }) ohne Nutzlast als identifizierbare robotergeführte Nutzlastanordnung vorgesehen ist.

5. Verfahren nach einem der vorhergehenden Ansprüche, wobei in einem vorgegebenen Zustand der Roboteranordnung eine Nutzlastanordnung mit mehreren Nutzlasten (N1, N2, N3) als robotergeführte Nutzlastanordnung (N) identifiziert ist (S10).

6. Verfahren nach einem der vorhergehenden Ansprüche, wobei wenigstens eine Nutzlastaufbewahrungsposition mit der Roboteranordnung angefahren und eine einer dieser Nutzlastaufbewahrungsposition zugeordneten Nutzlast (N1, N2, N3, { }) zugeordnete Wechselposition (P1, P2, P3, P4) auf Basis einer Position der Roboteranordnung vorgegeben wird, in der die Roboteranordnung diese Nutzlastaufbewahrungsposition angefahren hat.

7. Verfahren nach einem der vorhergehenden Ansprüche, wobei verschiedenen Nutzlasten (N1, N2, N3, {}) unterschiedliche Wechselpositionen (P1, P2, P3, P4) zugeordnet sind.

8. Verfahren nach einem der vorhergehenden Ansprüche, wobei die Roboteranordnung auf Basis der identifizierten robotergeführten Nutzlastanordnung auf Kollision überwacht wird.

9. Überwachungsmittel zum Überwachen einer nutzlastführenden Roboteranordnung mit wenigstens einem Roboter (1), wobei das Überwachungsmittel zum Ermitteln einer aktuellen Position (TCP) der Roboteranordnung und zum Durchführen eines Verfahrens nach einem der vorhergehenden Ansprüche eingerichtet ist.

10. Roboteranordnung mit wenigstens einem Roboter (1), einem Überwachungsmittel nach dem vorhergehenden Anspruch sowie einer Nutzlastaufnahme (2) zum Aufnehmen verschiedener Nutzlasten (N1, N2, N3), wobei der Roboter zum abwechselnden Führen dieser Nutzlasten eingerichtet ist.

11. Computerprogrammprodukt mit einem Programmcode, der auf einem von einem Computer lesbaren Medium gespeichert ist, und der bewirkt, dass das Überwachungsmittel des Anspruchs 9 die Verfahrensschritte nach einem der Ansprüche 1 bis 8 ausführt.

## Claims

1. A method of monitoring a payload-handling robot assembly comprising at least one robot (1), **characterised in that** an arrangement of a robot-handled payload (N) is identified (S30, S40) on the basis of a current position (TCP) of the robot assembly relative to a specified change position (P1, P2, P3, P4) of the robot assembly, wherein a payload (N1, N2, N3, { }) is identified (S40) as an arrangement of a robot-handled payload (N) when a deviation between the current position of the robot assembly and a change position which is assigned to this payload falls (S30) below a specified threshold value (Δ).

2. The method in accordance with the preceding claim, wherein a payload change is determined on the basis of an actuation of the robot assembly (S20).

3. The method in accordance with any one of the preceding claims, wherein an identified arrangement of a robot-handled payload is replaced with a new identified arrangement of a payload (S40).

4. The method in accordance with any one of the preceding claims, wherein, at least during a movement of the robot assembly, a payload arrangement with at least one payload is always identified as an arrangement of a robot-handled payload, or wherein a payload arrangement (N = { }) without a payload is provided as an identifiable arrangement of a robot-handled payload.

5. The method in accordance with any one of the preceding claims, wherein, in a predetermined state of the robot assembly, a payload arrangement with a plurality of payloads (N1, N2, N3) is identified (S10) as an arrangement of a robot-handled payload (N).

6. The method in accordance with any one of the preceding claims, wherein at least one payload storage position is approached by the robot assembly, and a change position (P1, P2, P3, P4) which is assigned to a payload (N1, N2, N3, {}) which is assigned to this payload storage position is specified on the basis of a position of the robot assembly in which position the robot assembly has approached this payload storage position.

7. The method in accordance with any one of the preceding claims, wherein different change positions (P1, P2, P3, P4) are assigned to different payloads (N1, N2, N3, {}).

8. The method in accordance with any one of the preceding claims, wherein the robot assembly is monitored for collision on the basis of the identified arrangement of a robot-handled payload.

9. A monitoring means for monitoring a payload-handling robot assembly comprising at least one robot (1), wherein the monitoring means is arranged to determine a current position (TCP) of the robot assembly and to carry out a method in accordance with any one of the preceding claims.

10. A robot assembly comprising at least one robot (1), a monitoring means in accordance with the preceding claim, as well as a payload receptacle (2) for receiving a plurality of different payloads (N1, N2, N3), wherein the robot is arranged to handle these payloads in an alternating manner.

11. A computer program product which comprises a program code which is stored on a computer-readable medium, and which causes the monitoring means in accordance with claim 9 to carry out the method steps in accordance with any one of the claims 1 to 8.

## Revendications

1. Procédé de surveillance d'un système de robot guidant une charge utile avec au moins un robot (1), **caractérisé en ce qu'**un système de charge utile (N) guidé par robot est identifié sur la base d'une position actuelle (TCP) du système de robot par rapport à une position de changement (P1, P2, P3, P4) prédéfinie du système de robot (S30, S40), dans lequel une charge utile (N1, N2, N3, { }) est identifiée en tant que système de charge utile (N) guidé par robot (S40), lorsqu'un écart entre la position actuelle du système de robot et une position de changement associée à cette charge utile dépasse une valeur limite prédéfinie (Δ) (S30).

2. Procédé selon la revendication précédente, dans lequel un changement de charge utile est déterminé sur la base d'un actionnement du système de robot (S20).

3. Procédé selon l'une quelconque des revendications précédentes, dans lequel un système de charge utile guidé par robot identifié est remplacé par un nouveau système de charge utile identifié (S40).

4. Procédé selon l'une quelconque des revendications précédentes, dans lequel au moins pendant un déplacement du système de robot, un système de charge utile avec au moins une charge utile est toujours identifié en tant que système de charge utile guidé par robot ou dans lequel un système de charge utile (N = { }) sans charge utile est prévu en tant que système de charge utile guidé par robot identifiable.

5. Procédé selon l'une quelconque des revendications précédentes, dans lequel dans un état prédéfini du système de robot, un système de charge utile avec plusieurs charges utiles (N1, N2, N3) est identifié en tant que système de charge utile (N) guidé par robot (S10).

6. Procédé selon l'une quelconque des revendications précédentes, dans lequel au moins une position de rangement de charge utile est approchée avec le système de robot et une position de changement (P1, P2, P3, P4) associée à une charge utile (N1, N2, N3, { }) associée à cette position de rangement de charge utile est prédéfinie sur la base d'une position du système de robot, dans laquelle le système de robot a approché cette position de rangement de charge utile.

7. Procédé selon l'une quelconque des revendications précédentes, dans lequel différentes positions de changement (P1, P2, P3, P4) sont associées à différentes charges utiles (N1, N2, N3, {}).

8. Procédé selon l'une quelconque des revendications précédentes, dans lequel le système de robot est surveillé sur la base du système de charge utile guidé par robot identifié quant à une collision.

9. Moyen de surveillance pour surveiller un système de robot guidant une charge utile avec au moins un robot (1), dans lequel le moyen de surveillance est aménagé pour déterminer une position actuelle (TCP) du système de robot et pour réaliser un procédé selon l'une quelconque des revendications précédentes.

10. Système de robot avec au moins un robot (1), un moyen de surveillance selon la revendication précédente ainsi qu'un logement de charge utile (2) pour recevoir différentes charges utiles (N1, N2, N3), dans lequel le robot est aménagé pour guider ces charges utiles en alternance.

11. Produit de programme informatique avec un code de programme, qui est enregistré sur un support lisible par un ordinateur, et qui fait que le moyen de surveillance de la revendication 9 exécute les étapes de procédé selon l'une quelconque des revendications 1 à 8.
